# EUROPEAN PATENT APPLICATION

(11) **EP 4 830 886 A1**
(43) Date of publication of application: **28.10.2026**
(21) Application number: 24908365.0
(22) Date of filing: 18.12.2024
(51) Int. Cl.: B25J 19/00, F16D 51/04

(54) **DRIVE SHAFT BRAKING APPARATUS**

(30) Priority: 18.12.2023 KR 20230184046
(71) Applicant: Rainbow Robotics Inc., Sejong-si 30141 (KR)
(72) Inventor: HEO, Jung Woo, Daejeon 34121 (KR); PARK, Seon Ki, Daejeon 35364 (KR); AHN, Tae Kyu, Sejong 30063 (KR); BAE, Seung Yong, Daejeon 34052 (KR); YOU, Dong Geun, Daejeon 34050 (KR)
(74) Representative: Viering, Jentschura & Partner mbB Patent- und Rechtsanwälte
(86) International application number: PCT/KR2024/097150
(87) International publication number: WO 2025/136061

(57) **Abstract**

The drive shaft braking device according to an embodiment of the present invention is a braking apparatus for braking a drive shaft used for an arm of a robot. The drive shaft braking apparatus comprises: a brake outer ring to which a brake ring is coupled so as to apply braking or release the braking by means of an interaction with brake wings; and a ring-shaped brake pad coupled to the inside of the brake outer ring in such a way as to allow the drive shaft to be located on the inside thereof. The inner surface of the brake pad and the outer surface of the drive shaft partially contact each other such that the impact occurring when the brake ring is locked onto the brake wings is reduced and then transferred to the drive shaft through the brake outer ring and the brake pad.

## Description

### Technical Field

The present invention relates to a drive shaft braking device, more specifically to a drive shaft braking device that is capable of performing braking accurately and reducing an impact generated during the braking and thus transferred to a drive shaft, thereby keeping the durability of both of the drive shaft and a brake pad surrounding the drive shaft.

### Background Art

With the development of robot technologies, recently, needs for intelligent robots capable of performing various work as well as for robots for industrial uses, instead of human beings, have increasingly emerged, and accordingly, many studies on the intelligent robots have been dynamically made.

So as to develop the intelligent robots, advanced technologies such as advanced materials, semiconductors, artificial intelligence, sensor software, and the like as well as traditional technologies such as machines, electronics, and the like are required, and unlike existing robots for industrial uses, the intelligent robots are robots having functions and performance necessary in future markets.

Further, robots for industrial and service uses have been developed and used in various fields, and they perform high-skilled work as well as simple work accurately and quickly, so that they has been increasingly used.

An articulation module of the robot used for various industrial and service fields includes a motor, a torque sensor for stably driving the motor, and a braking device, and among them, the braking device is necessarily used to control acceleration and deceleration of an object moving or to maintain a position of a robot arm when the robot arm stops working.

A conventional braking device performs a braking operation for an object through a frictional type brake pad, and the brake pad mechanically comes into contact with the object to be braked, so that the braking operation for the object can be performed through a frictional force generated from the contact therebetween.

In case of the conventional braking device, however, slip occurs in the process of performing the mechanical braking operation of the brake pad, thereby having limitations in being used for a part where a stopping force is regulated in a relatively accurate way, for example, for a robot articulation.

In case of the conventional braking device, further, the entire area of the inner peripheral surface of the brake pad is surroudingly brought into close contact with the outer peripheral surface of the drive shaft, so that if an impact occurs on the brake ring, the impact is transferred to the drive shaft, thereby causing the durability of the drive shaft to become deteriorated and making the brake pad surrounding the drive shaft worn.

Therefore, there is a need to develop a drive shaft braking device that has a new configuration capable of performing braking accurately if a brake ring is braked and reducing an impact generated during the braking and thus transferred to a drive shaft, thereby keeping the durability of both of the drive shaft and a brake pad surrounding the drive shaft.

### Disclosure

### Technical Problem

Accordingly, it is an object of the present invention to provide a drive shaft braking device that is capable of performing braking accurately and reducing the impacts generated during the braking and thus transferred to a drive shaft, thereby keeping the durability of both of the drive shaft and a brake pad surrounding the drive shaft.

The technical objects to be achieved through the present invention are not limited as mentioned above, and other technical objects not mentioned herein will be obviously understood by one of ordinary skill in the art through the following description.

### Technical Solution

According to an embodiment of the present invention, a drive shaft braking device may be a braking device for braking a drive shaft used for a robot arm and include: a brake outer ring coupled to a brake ring adapted to be braked or released from a braked state by means of the interaction with brake wings; and a ring-shaped brake pad coupled to the inside of the brake outer ring in such a way as to allow the drive shaft to be located on the inside thereof, wherein the inner peripheral surface of the brake pad and the outer peripheral surface of the drive shaft may be partially brought into close contact with each other so that the impact occurring when the brake ring is locked onto the brake wings is reduced and then transferred through the brake outer ring and the brake pad to the drive shaft.

According to one aspect of the present invention, the brake outer ring may have the shape of a circular ring with a cut section, and as the cut section may be connected by means of a connector in such a way as to be adjusted in distance to allow the diameter of the brake outer ring and the diameter of the brake pad to be adjustable.

According to one aspect of the present invention, the connector may be a pre-pressure wrench bolt and have a head coupled to one side of the cut section of the brake outer ring and a leg coupled to the other side of the cut section of the brake outer ring so that the distance of the cut section may be adjusted by means of rotations of the connector.

According to one aspect of the present invention, the brake pad may have a cut section corresponding to the cut section of the brake outer ring so that if the cut section of the brake outer ring is adjusted in distance by means of the connector, the distance of the cut section of the brake pad and the diameter of the brake pad may be adjusted.

According to one aspect of the present invention, the brake pad may have a pair of contact portions protruding from the inner peripheral surface thereof in such a way as to be symmetrical to each other, and one contact portion may be located on the cut section of the brake pad, while the other contact portion is being located symmetrically on the opposite side to one contact portion.

According to one aspect of the present invention, the area of the contact portions of the brake pad may be 1/6 to 1/4 of the area of the inner peripheral surface of the brake pad.

According to one aspect of the present invention, if the connector rotates to allow the distance of the cut section of the brake outer ring to be reduced, a pre-pressure may be applied to the brake outer ring to generate a fastening torque, so that the diameters of the brake outer ring and the brake pad may be reduced within an elastic limit by means of the fastening torque, and next, load may be generated radially between the brake pad and the drive shaft to generate a frictional torque when the brake ring is braked by means of the brake wings.

According to one aspect of the present invention, the brake ring may have one or more locking pieces protruding therefrom, and the brake wings may be rotatably coupled to brake shafts of a support frame fixed to the robot arm, so that the brake ring may be braked by means of physical interference between the locking pieces of the brake ring and locking protrusions formed on one side of the brake wings to thus stop the rotation of the drive shaft.

According to one aspect of the present invention, the drive shaft braking device may further include: position regulators adapted to rotate the brake wings in such a way as to adjust the positions of the locking protrusions and thus control locking of the locking pieces of the brake ring onto the locking protrusions or releasing from the locking; and an elastic member adapted to an elastic force to the rotation of each brake wing.

According to one aspect of the present invention, the end of each locking piece of the brake ring may include a triangular portion having the shape of an isosceles triangle gradually reduced in width toward the outside and a rectangular portion having the shape of a rectangle and located on a vertex of the triangular portion, and the locking protrusions of the brake wings may have the shapes of grooves adapted to lock the rectangular portions of the locking pieces thereonto or release the rectangular portions of the locking pieces from the locked states.

According to one aspect of the present invention, the position regulators may be solenoids adapted to press the other side of the brake wings or release the other side of the brake wings from pressed states to thus allow the brake wings to rotate around the brake shafts.

### Advantageous Effects of the Invention

According to the present invention, the drive shaft braking device can perform braking accurately and reduce the impact generated during the braking and thus transferred to the drive shaft, thereby keeping the durability of both of the drive shaft and the brake pad surrounding the drive shaft.

### Brief Description of Drawings

FIG. 1 is a perspective view showing a drive shaft braking device according to an embodiment of the present invention.
FIG. 2 is a sectional view showing the drive shaft braking device of FIG. 1.
FIG. 3 schematically shows a coupled structure between a brake ring and a drive shaft of FIG. 1.
FIG. 4 shows configurations of a brake outer ring, a brake pad, and the drive shaft of FIG. 1.
FIG. 5 schematically shows a state wherein a given portion of the brake pad of FIG. 4 is brought into close contact with the outer peripheral surface of the drive shaft.

### Mode for Disclosure

Objects, characteristics and advantages of the present invention will be more clearly understood from the detailed description as will be described below and the attached drawings, and it is to be appreciated that those skilled in the art can change or modify the embodiments without departing from the scope and spirit of the present invention. If it is determined that the detailed explanation on the well-known technology related to the present invention makes the scope of the present invention not clear, the explanation will be avoided for the brevity of the description. In the description, the same reference numerals will be used to describe the same components.

Hereinafter, embodiments of the present invention will be explained in detail with reference to the attached drawings.

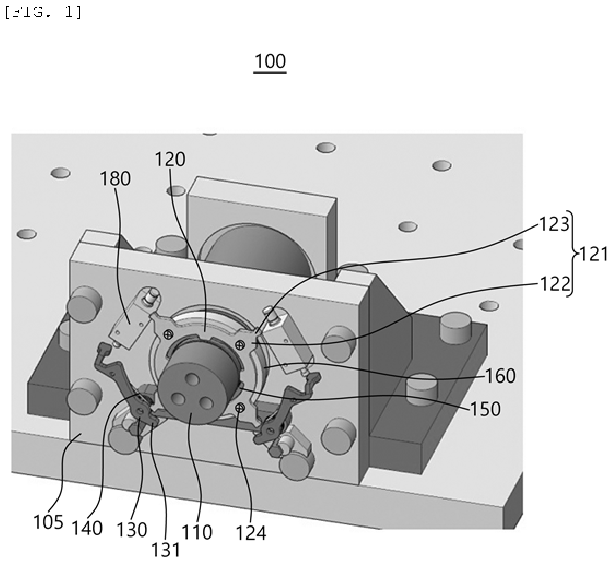

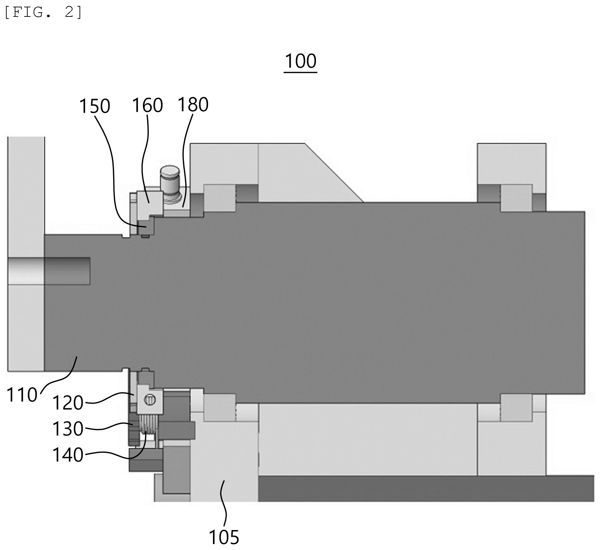

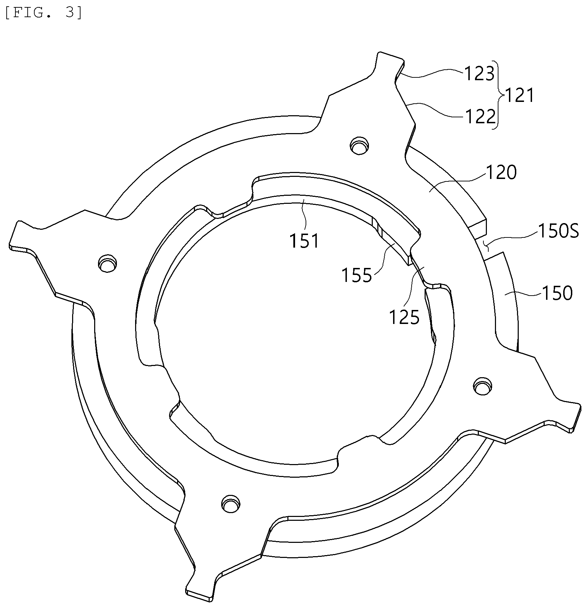

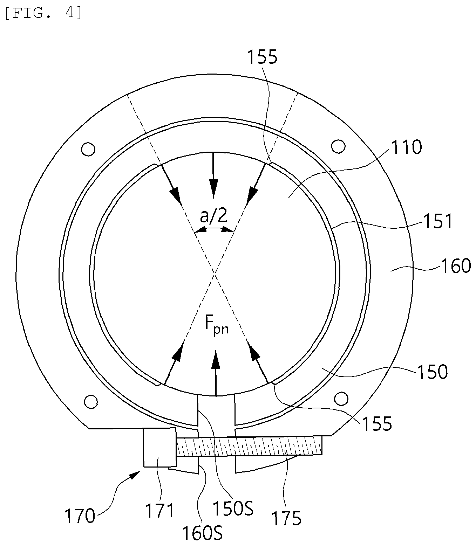

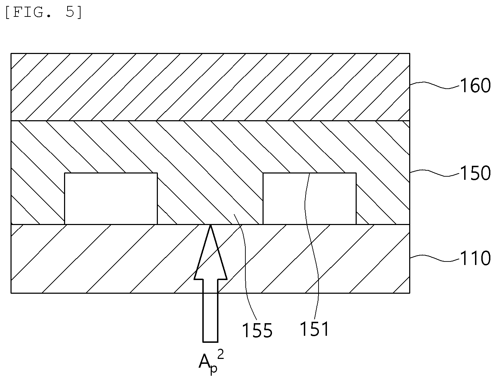

FIG. 1 is a perspective view showing a drive shaft braking device according to an embodiment of the present invention, FIG. 2 is a sectional view showing the drive shaft braking device of FIG. 1, FIG. 3 schematically shows a coupled structure between a brake ring and a drive shaft of FIG. 1, FIG. 4 shows configurations of a brake outer ring, a brake pad, and the drive shaft of FIG. 1, and FIG. 5 schematically shows a state wherein a given portion of the brake pad of FIG. 4 is brought into close contact with the outer peripheral surface of the drive shaft.

Even though specifically shown, a drive shaft braking device 100 according to an embodiment of the present invention is coupled to a drive shaft 110 of a motor at the inside of an articulation of a robot arm, together with a decelerator and an encoder, so that when the motor stops, the braking device 100 stops the rotation of the articulation at an accurate position and thus keeps the stopped position.

For example, the articulation is provided for various robots such as collaborative robots, robots for industrial uses, humanoid robots, robot manipulators, and the like, but according to the present invention, the articulation may not be limited thereto. To be specific, the braking device 100 can be used as a brake mechanism coupled to drive shafts of a variety of devices as well as the robots.

As shown in FIGs. 1 and 2, the drive shaft braking device 100 according to the embodiment of the present invention includes brake wings 130 mounted on a support frame 105, a brake outer ring 160 coupled to a brake ring 120 adapted to be braked or released from the braked state by means of the interaction with the brake wings 130, and a ring-shaped brake pad 150 coupled to the inside of the brake outer ring 160 in such a way as to allow the drive shaft 110 of the robot arm to be located on the inside thereof.

Hereinafter, an explanation on a braking configuration of the brake ring 120 and the brake wings 130 will be first given, and next, a configuration in which an impact occurring on the brake ring 120 is transferred to the drive shaft 110 will be described.

Referring to FIGs. 1 and 2, the brake ring 120 is coupled to the brake outer ring 160, and the brake outer ring 160 is coupled to the drive shaft 110, while placing the brake pad 150 therebetween, so that while the drive shaft 110 is rotating, the brake ring 120 rotates together in such a way as to be braked or released from the braked state by means of the brake wings 130 adjusted in position by position regulators 180 as will be discussed later.

For example, as shown in FIGs. 1 to 3, the brake ring 120 has the shape of an entirely circular ring having four locking pieces 121 protruding radially therefrom.

As shown in FIG. 3, the end of each locking piece 121 includes a triangular portion 122 having the shape of an isosceles triangle gradually reduced in width toward the outside and a rectangular portion 123 having the shape of a rectangle and located on a vertex of the triangular portion 122, and the rectangular portions 123 are locked onto the brake wings 130 or released from the locked states on the brake wings 130.

Referring to FIG. 3, further, the brake ring 120 has four protruding portions 125 protruding from the inner periphery thereof in such a way as to be supported against the drive shaft 110. For example, buffering materials made of silicone are disposed on the ends of the protruding portions 125, thereby decreasing the impact applied to the drive shaft 110.

Moreover, the brake wings 130, which rotate around brake shafts of the support frame 105 fixed to the robot arm, have locking protrusions 131 adapted to rotate the drive shaft 110 or stop the rotation of the drive shaft 110 by means of physical interference with the ends of the locking pieces 121, so that the braking device 100 capable of bi-directional braking, while having a small gap, can be provided.

To be more specific, the locking protrusions 131 of the brake wings 130 have grooves adapted to lock the rectangular portions 123 of the locking pieces 121 thereonto or release the rectangular portions 123 of the locking pieces 121 from the locked states, so that the rectangular portions 123 of the locking pieces 121 are locked onto the locking protrusions 131 and kept firmly at the locked states and if the brake wings 130 are rotated by means of the position regulators 180 as will be discussed later, the locked states of the rectangular portions 123 of the locking pieces 121 onto the locking protrusions 131 are released smoothly.

As shown in FIGs. 1 and 2, the brake wings 130 are located on both sides of the support frame 105, and they are rotated by means of the position regulators 180 located on both sides of the support frame 105.

To be specific, the locking protrusion 131 of each brake wing 130 moves between a locking position located within a turning radius of the end of each locking piece 121 of the brake ring 120 according to the rotation of the brake wing 130 by means of the corresponding position regulator 180 and a locking-releasing position located on the outside of the turning radius of the end of the locking piece 121.

If the locking protrusions 131 of the brake wings 130 move to the locking positions, as a result, the rotation of the drive shaft 110 is stopped by means of the physical interference between the locking protrusions 131 and the rectangular portions 123 of the ends of the locking pieces 121 of the brake ring 120, and if the locking protrusions 131 of the brake wings 130 move to the locking-releasing positions, they have no physical interference with the rectangular portions 123, thereby having no influence on the rotation of the drive shaft 110.

According to the embodiment of the present invention, further, the position regulators 140 are formed of solenoids adapted to rotate the brake wings 130 according to existence or non-existence or direction of input current to allow the locking protrusions 131 to move to any one of the locking position and the locking-releasing position.

Referring to FIGs. 1 and 2, an elastic member 140 is located on each brake wing 130 to apply an elastic force to the brake wing 130. To be specific, a spring type elastic member 140 is located on each brake wing 130 so that if the other side of the brake wing 130, that is, a portion adjacent to the corresponding position regulator 180 is not pushed by the position regulator 180, the brake wing 130 is located on the locking-releasing position where the locking piece 121 of the brake ring 120 is not locked.

If the other side of the brake wing 130 is pushed by the position regulator 180, contrarily, the brake wing 130 rotates to the opposite direction to a direction to which the elastic force is applied and is thus located on the locking position so that the locking piece 121 of the brake ring 120 is locked onto the locking protrusion 131 of the brake wing 130.

According to the embodiment of the present invention, the configuration where the brake wings 130 are located on both sides of the support frame 105 and the position regulators 180 are located to correspond to the brake wings 130 have been explained with reference to FIGs. 1 and 2, but without being limited thereto, even though not shown, one brake wing and one position regulator for rotating the brake wing may be provided. In this case, however, the locking protrusion of the brake wing has the shape of a groove capable of bi-directional movements of the locking pieces of the brake ring.

According to the embodiment of the present invention, like this, the brake ring 120 is braked or released from the braked state by means of the brake wings 130 adjusted in position through the position regulators 180.

However, in the process of braking the brake ring 120 through the brake wings 130, an impact is generated, and the impact is transferred to the brake outer ring 160 to which the brake ring 120 is coupled, the brake pad 150, and the drive shaft 110. If the impact is transferred, without being reduced, the durability of the drive shaft 110 may become deteriorated and the brake pad 150 may be worn.

To prevent such problems, accordingly, the drive shaft braking device 100 of the present invention has a contact structure between the brake pad 150 and the drive shaft 110.

According to the embodiment of the present invention, as mentioned above, the drive shaft braking device 100 includes the brake outer ring 160 and the ring-shaped brake pad 150 coupled to the inside of the brake outer ring 160 in such a way as to allow the drive shaft 110 of the robot arm to be located on the inside thereof.

In this case, as shown in FIGs. 4 and 5, the inner peripheral surface of the brake pad 150 and the outer peripheral surface of the drive shaft 110 are partially brought into close contact with each other, not entirely brought into close contact with each other, so that the impact occurring when the brake ring 120 is locked onto the brake wings 130 is reduced in proportion to the contact area between the brake pad 150 and the drive shaft 110, without being all transferred to the drive shaft 110.

To be specific, the impact occurring when the locking pieces 121 of the brake ring 120 are locked onto the locking protrusions 131 of the brake wings 130 is reduced by means of the partial contacts between the brake pad 150 and the drive shaft 110 and then transferred to the drive shaft 110, so that the durability of the drive shaft 110 becomes kept and the wear of the brake pad 150 is minimized.

According to the embodiment of the present invention, as shown in FIGs. 1 and 4, the brake outer ring 160 has the shape of an entire ring in such a way as to fix the brake ring 120 to the front surface thereof by means of fixing bolts 124. Four fixing bolts 124 pass through the brake ring 120 and are thus coupled to the brake outer ring 160, so that the position of the brake ring 120 with respect to the brake outer ring 160 is firmly kept.

As schematically shown in FIG. 4, the brake outer ring 160 has the shape of the ring with a cut section 160S, and the cut section 160S is connected by a connector 170 and thus adjusted in distance.

As shown in FIGs. 1 and 4, a pre-pressure wrench bolt is used as the connector 170. To be specific, a head 171 of the connector 170 is coupled to one side of the cut section 160S of the brake outer ring 160, and a leg 175 of the connector 170, along which a screw thread is formed, is coupled to the other side of the cut section 160S of the brake outer ring 160, so that if the connector 170 rotates, one side of the cut section 160S becomes close to or separated from the other side of the cut section 160S by means of screw movements.

As a result, the distance of the cut section 160S is adjusted to allow the diameter of the brake outer ring 160 and the diameter of the brake pad 150 located on the inside of the brake outer ring 160 to be adjustable.

It is possible that precise adjustment using a high reduction rate is performed through the connector 170, which allows the diameter of the brake outer ring 160 to be adjusted to a micrometer unit. As a result, an initial pre-pressure required to generate frictional torque between the brake pad 150 and the drive shaft 110 is sensitively adjustable, which will be discussed later.

According to the embodiment of the present invention, as shown in FIG. 4, the brake pad 150 has the shape of an entire ring and is located inside the brake outer ring 160, while having a cut section 150S corresponding to the cut section 160S of the brake outer ring 160. If the cut section 160S of the brake outer ring 160 is adjusted in distance by means of the connector 170, the cut section 150S of the brake pad 150 is adjusted to allow the diameter of the brake pad 150 to be adjustable.

According to the embodiment of the present invention, as mentioned above, the inner peripheral surface of the brake pad 150 and the outer peripheral surface of the drive shaft 110 are not entirely brought into close contact with each other, but partially brought into close contact with each other, so that an amount of the impact transferred to the drive shaft 110 can be reduced.

As shown in FIG. 4 and shown in FIG. 5 exaggeratedly for the conveniences of explanations, the brake pad 150 has a pair of contact portions 155 protruding from the inner peripheral surface thereof in such a way as to be symmetrical to each other. One contact portion 155 is located on the cut section 150S of the brake pad 150, and the other contact portion 155 is located symmetrically on the opposite side to one contact portion 155.

For example, the contact portions 155 are formed on 1/6 to 1/4 of the area of the inner peripheral surface of the brake pad 150, so that the brake pad 150 is not brought into close contact with the entire portion 151 except the contact portions 155.

According to the embodiment of the present invention, referring to FIG. 4, a frictional coefficient Mₚ of the brake pad 150 is obtained by the following equations:
${M}_{p} = {F}_{pn} \frac{{D}_{1}}{2} = {μ}_{p} {F}_{pn} \frac{{D}_{1}}{2}$ Equation 1
${F}_{pn} = {K}_{pn} ⋅ {δ}_{pn}$ Equation 2
${K}_{pn} = \frac{{{A}_{p}}^{m} ⋅ {E}_{p}}{{L}_{p}}$ Equation 3
${δ}_{pn} = \left|\frac{{D}_{1} - {D}_{0}}{2}\right|$ Equation 4
${{A}_{p}}^{m} = \frac{α}{360 °} {πd}_{c} {d}_{h}$ Equation 5
(wherein, Mₚ is a frictional torque of the brake pad 150, µₚ is a frictional coefficient of the brake pad 150, Nₚ is vertical load applied to the brake pad 150, D₀ is an initial contact diameter, D₁ is a contact diameter changed, Kₚₙ is a vertical stiffness coefficient of the brake pad 150, δₚₙ is a rate of change of diameter of the brake pad 150, Aₚ^{m} is a contact area of the brake pad 150, m is a contact area number, α is a contact area angle, Eₚ is an elastic coefficient of the brake pad 150, Lₚ is a thickness of the brake pad 150, d_{c} is a diameter of the drive shaft 110, and dₕ is a height of the brake pad 150).

If the contact area between the brake pad 150 and the drive shaft 110 is small, the frictional torque is low to keep the durability of the drive shaft 110 and minimize the wear of the brake pad 150.

As the contact area between the brake pad 150 and the drive shaft 110 is small, the vertical stiffness coefficient Kₚₙ of the brake pad 150 becomes low, and the stiffness coefficient is proportional to the elastic coefficient Eₚ, so that if the elastic coefficient is low within elastic limit, strain with respect to the same vertical load becomes high.

That is, the contact area between the brake pad 150 and the drive shaft 110 is small to reduce the sensitivity to the change in diameter of the brake pad 150.

To be specific, as mentioned above, the connector 170 provided as the wrench bolt rotates to apply pre-pressure to the brake outer ring 160 so that a fastening torque is generated, and next, the diameters of the brake outer ring 160 and the brake pad 150 are reduced within the elastic limit by means of the fastening torque, so that load is generated radially between the brake pad 150 and the drive shaft 110, thereby generating a frictional torque when the brake ring 120 is braked.

According to the embodiment of the present invention, like this, braking is accurately performed, and the impact generated during the braking and thus transferred to the drive shaft 110 is reduced, thereby keeping the durability of both of the drive shaft 110 and the brake pad 150 surrounding the drive shaft 110.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

The present invention may be modified in various ways and may have several exemplary embodiments. Specific exemplary embodiments of the present invention are illustrated in the drawings and described in detail in the detailed description. However, this does not limit the invention within specific embodiments and it should be understood that the invention covers all the modifications, equivalents, and replacements within the idea and technical scope of the invention.

## Claims

1. A drive shaft braking device for braking a drive shaft used for a robot arm, comprising:
a brake outer ring coupled to a brake ring adapted to be braked or released from a braked state by means of the interaction with brake wings; and
a ring-shaped brake pad coupled to the inside of the brake outer ring in such a way as to allow the drive shaft to be located on the inside thereof,
wherein the inner peripheral surface of the brake pad and the outer peripheral surface of the drive shaft are partially brought into close contact with each other so that the impact occurring when the brake ring is locked onto the brake wings is reduced and then transferred through the brake outer ring and the brake pad to the drive shaft.

2. The drive shaft braking device according to claim 1, wherein the brake outer ring has the shape of a circular ring with a cut section, and as the cut section is connected by means of a connector in such a way as to be adjusted in distance to allow the diameter of the brake outer ring and the diameter of the brake pad to be adjustable.

3. The drive shaft braking device according to claim 2, wherein the connector is a pre-pressure wrench bolt and has a head coupled to one side of the cut section of the brake outer ring and a leg coupled to the other side of the cut section of the brake outer ring so that the distance of the cut section is adjusted by means of rotations of the connector.

4. The drive shaft braking device according to claim 3, wherein the brake pad has a cut section corresponding to the cut section of the brake outer ring so that if the cut section of the brake outer ring is adjusted in distance by means of the connector, the distance of the cut section of the brake pad and the diameter of the brake pad are adjusted.

5. The drive shaft braking device according to claim 4, wherein the brake pad has a pair of contact portions protruding from the inner peripheral surface thereof in such a way as to be symmetrical to each other, and one contact portion is located on the cut section of the brake pad, while the other contact portion is being located symmetrically on the opposite side to one contact portion.

6. The drive shaft braking device according to claim 5, wherein the area of the contact portions of the brake pad is 1/6 to 1/4 of the area of the inner peripheral surface of the brake pad.

7. The drive shaft braking device according to claim 4, wherein if the connector rotates to allow the distance of the cut section of the brake outer ring to be reduced, a pre-pressure is applied to the brake outer ring to generate a fastening torque, so that the diameters of the brake outer ring and the brake pad are reduced within an elastic limit by means of the fastening torque, and next, load is generated radially between the brake pad and the drive shaft to generate a frictional torque when the brake ring is braked by means of the brake wings.

8. The drive shaft braking device according to claim 1, wherein the brake ring has one or more locking pieces protruding therefrom, and the brake wings are rotatably coupled to brake shafts of a support frame fixed to the robot arm, so that the brake ring is braked by means of physical interference between the locking pieces of the brake ring and locking protrusions formed on one side of the brake wings to thus stop the rotation of the drive shaft.

9. The drive shaft braking device according to claim 8, further comprising:
position regulators adapted to rotate the brake wings in such a way as to adjust the positions of the locking protrusions and thus control locking of the locking pieces of the brake ring onto the locking protrusions or releasing from the locking; and
an elastic member adapted to an elastic force to the rotation of each brake wing.

10. The drive shaft braking device according to claim 9, wherein the end of each locking piece of the brake ring comprises a triangular portion having the shape of an isosceles triangle gradually reduced in width toward the outside and a rectangular portion having the shape of a rectangle and located on a vertex of the triangular portion, and the locking protrusions of the brake wings have the shapes of grooves adapted to lock the rectangular portions of the locking pieces thereonto or release the rectangular portions of the locking pieces from the locked states.

11. The drive shaft braking device according to claim 10, wherein the position regulators are solenoids adapted to press the other side of the brake wings or release the other side of the brake wings from pressed states to thus allow the brake wings to rotate around the brake shafts.
